# EUROPÄISCHE PATENTSCHRIFT

(11) **EP 4 513 081 B1**
(45) Veröffentlichungstag und Bekanntmachung des Hinweises auf die Patenterteilung: **15.10.2025**
(21) Anmeldenummer: 23192770.8
(22) Anmeldetag: 22.08.2023
(51) Int. Cl.: F21S 43/237, F21S 43/239, F21S 43/245, F21S 43/251, F21S 43/27, F21V 8/00, G02B 7/00, G02B 6/42, F21S 43/235, G02B 6/36

(54) **SYSTEM ZUM BEFESTIGEN UND SPANNEN EINES LICHTLEITERS AN EINEM TRÄGERELEMENT**
SYSTEM FOR ATTACHING AND TENSIONING A LIGHT GUIDE TO A SUPPORT ELEMENT
SYSTÈME DE FIXATION ET DE SERRAGE D'UN GUIDE DE LUMIÈRE SUR UN ÉLÉMENT DE SUPPORT

(43) Veröffentlichungstag der Anmeldung: 26.02.2025
(73) Patentinhaber: ZKW Group GmbH, 3250 Wieselburg (AT)
(72) Erfinder: Zeuner, Markus, 3240 Mank (AT)
(74) Vertreter: Patentanwaltskanzlei Matschnig & Forsthuber OG

(56) Entgegenhaltungen:
- WO-A1-2023/073147
- CN-A- 113 031 176
- DE-A1- 102020 130 973
- DE-A1- 102020 131 336
- DE-U1- 202022 001 042
- JP-A- 2014 172 450
- US-A1- 2022 341 558

## Beschreibung

### Technisches Gebiet

Die Erfindung betrifft ein System zum Befestigen und Spannen eines Lichtleiters an einem Trägerelement.

Die Erfindung betrifft ferner eine Beleuchtungsvorrichtung für ein Kraftfahrzeug, umfassend ein System zum Befestigen und Spannen eines Lichtleiters an einem Trägerelement.

### Technischer Hintergrund

Im Stand der Technik sind Befestigungssysteme zum Befestigen von Lichtleitern bekannt. Üblicherweise wird dabei ein Lichtleiter in eine Ausnehmung gepresst, welche eine zu dem Lichtleiter korrespondierend ausgebildete Form aufweist. Dabei muss jedoch eine Mantelfläche des Lichtleiters umfangseitig um mehr als 50% umschlossen werden, um den Lichtleiter in der Ausnehmung zu fixieren. Dadurch wird nachteiligerweise die emittierte Lichtmenge reduziert. Alternativ dazu werden Lichtleiter im Stand der Technik zwischen zwei Teilen eingeklemmt, wobei einer der beiden Teile häufig transparent ausgebildet ist. Dies hat jedoch den Nachteil, dass zwei Teile zur Fixierung benötigt werden. Die bekannten Systeme liefern überdies keine Lösung zur Spannung des Lichtleiters. Somit muss ein Spannen des Lichtleiters bei den bekannten Systemen stets über eine gesonderte Spannvorrichtung erfolgen. DE 20 2022 001042 U1 offenbart eine Lampe für ein Fahrzeug umfassend: eine Lichtquelleneinheit mit einer Lichtquelle und einer Platine; und eine vor der Lichtquelleneinheit angeordnete optische Faser. Die Lichtquelle kann z. B. eine LED sein, und die Platine kann eine Leiterplatte sein. Das von der Lichtquelle der Lichtquelleneinheit ausgestrahlte Licht kann in die Lichtleitfaser eintreten und sich in der Lichtleitfaser ausbreiten, wobei es totalreflektiert wird. In diesem Fall kann das sich in der Lichtleitfaser ausbreitende Licht durch eine Seitenfläche der Lichtleitfaser nach außen abgestrahlt werden. Die Lampe kann ferner eine innere Linse umfassen, die zwischen der Lichtquelleneinheit und der Lichtleitfaser angeordnet und vorgesehen ist, in engem Kontakt mit der Platine zu stehen, und die innere Linse kann eine Seite der Lichtleitfaser fixieren oder halten. Genauer gesagt kann die innere Linse ein hinteres Ende der Lichtleitfaser fixieren oder halten. Die Lampe kann ferner einen Kühlkörper umfassen, der hinter der Lichtquelleneinheit, d.h. der Platine, angeordnet und vorgesehen ist, in engem Kontakt mit einer Rückfläche der Platine zu stehen. Die Lichtquelleneinheit und der Kühlkörper können fest miteinander verbunden sein. Die Lampe kann ferner ein elastisches Element umfassen, das hinter dem Kühlkörper angeordnet und vorgesehen ist, in engem Kontakt mit dem Kühlkörper zu stehen, wobei das elastische Element Elastizität aufweist. Das elastische Element kann dann, wenn eine Form des elastischen Elements so verformt wird, dass das Ausmaß der Verformung relativ groß ist, den vor dem elastischen Element angeordneten Kühlkörper unter Verwendung einer Rückstellkraft des elastischen Elements nach vorn drücken. In diesem Fall bewegt sich der Kühlkörper nach vorn, und somit bewegt sich auch das hintere Ende der Lichtleitfaser (d. h. ein der Lichtquelleneinheit zugewandter Bereich der Lichtleitfaser) nach vorn, so dass die Spannung der Lichtleitfaser abnehmen kann. Wenn dagegen eine Form des elastischen Elements so verformt wird, dass der Betrag der Verformung relativ gering ist, verringert sich auch das Ausmaß, in dem das elastische Element den Kühlkörper nach vorn drückt, so dass sich der Kühlkörper nach hinten bewegt. Daher bewegt sich auch das hintere Ende der Lichtleitfaser nach hinten, so dass die Spannung der Lichtleitfaser zunehmen kann. Daher ist es möglich, die Spannung der Lichtleitfaser durch Bewegen des Kühlkörpers und der Lichtleitfaser durch Einstellen der auf das elastische Element ausgeübten Kraft einzustellen.

Die Aufgabe der vorliegenden Erfindung besteht darin, die Nachteile des Standes der Technik zu lindern bzw. zu beseitigen. Die Erfindung setzt sich daher insbesondere zum Ziel, ein verbessertes System zum Befestigen und Spannen eines Lichtleiters zu schaffen. Diese Aufgabe wird durch ein System mit den Merkmalen von Anspruch 1 gelöst. Bevorzugte Ausführungen sind in den abhängigen Ansprüchen angegeben.

### Kurzdarstellung der Erfindung

Erfindungsgemäß umfasst das System:
* einen Lichtleiter, vorzugsweise eine Lichtleitfaser, wobei der Lichtleiter einen ersten Endabschnitt, einen zweiten Endabschnitt, und einen zwischen dem ersten Endabschnitt und dem zweiten Endabschnitt ausgebildeten Lichtleiterkörper aufweist, wobei vorzugsweise der Lichtleiterkörper im Wesentlichen zylinderförmig ausgestaltet ist, wobei zumindest der erste Endabschnitt eine Lichteinkoppelfläche aufweist, über welche Licht einer Lichtquelle in den Lichtleiter einkoppelbar ist, wobei eine den Lichtleiterkörper begrenzende Lichtleiter-Mantelfläche zumindest abschnittsweise als Lichtauskoppelfläche ausgebildet ist, über welche in den Lichtleiter, durch dessen Lichteinkoppelfläche, eingekoppeltes Licht auskoppelbar ist,
* ein Trägerelement, umfassend einen Halteabschnitt, an welchem die Lichtleiter-Mantelfläche zumindest abschnittsweise aufliegt und welcher derart ausgestaltet ist, dass die aufliegende Lichtleiter-Mantelfläche von dem Halteabschnitt umfangseitig zumindest teilweise umhüllt ist, wobei das Trägerelement einen Befestigungsabschnitt und einen Spannabschnitt aufweist, wobei an dem Spannabschnitt der erste Endabschnitt des Lichtleiters verschiebbar gehalten ist, wobei an dem Befestigungsabschnitt der zweite Endabschnitt des Lichtleiters, insbesondere ortsfest, befestigt ist,
* eine Spannvorrichtung, welche dazu eingerichtet ist, den ersten Endabschnitt des Lichtleiters relativ zu dem Spannabschnitt des Trägerelements, durch Wirkung einer Spannkraft, entlang einer Spannrichtung zu verschieben, wodurch der Lichtleiter relativ zu dem Spannabschnitt des Trägerelements gespannt wird, wobei bei der Verschiebung ein Normalabstand, welcher größer null ist, der Lichteinkoppelfläche des ersten Endabschnitts zu dem Spannabschnitt des Trägerelements verringert wird, wobei der Halteabschnitt und der Spannabschnitt derart ausgestaltet sind, dass durch die auf den ersten Endabschnitt, in Richtung Spannabschnitt, wirkende Spannkraft eine Anpresskraft auf die Lichtleiter-Mantelfläche umgesetzt wird, durch welche die an dem Halteabschnitt aufliegende Lichtleiter-Mantelfläche an den Halteabschnitt angepresst wird.

Dadurch ergibt sich der Vorteil, dass einerseits der Lichtleiter an dem Halteabschnitt fixiert wird, und gleichzeitig ein Abstand zwischen der Lichteinkoppelfläche des Lichtleiters und dem Spannabschnitt des Trägerelements mit der Spannvorrichtung einstellbar ist. Durch die Anpresskraft kann der Lichtleiter bzw. dessen Mantelfläche an dem Halteabschnitt befestigt werden.

Es kann vorgesehen sein, dass die Spannvorrichtung ein linear verschiebbares, bevorzugt ein am Trägerelement linear verschiebbar gelagertes, Spannelement aufweist, welches dazu eingerichtet ist, in einen Eingriffsabschnitt des ersten Endabschnitts des Lichtleiters einzugreifen, wobei durch den Eingriff eine lineare Verschiebung des Spannelements auf den ersten Endabschnitt übertragen wird, wobei durch die lineare Verschiebung des Spannelements entlang der Spannrichtung der mit dem Spannelement in Eingriff befindliche erste Endabschnitt des Lichtleiters, insbesondere simultan mit dem Spannelement, in Richtung des Spannabschnitts des Trägerelements verschoben wird, wobei vorzugsweise das Spannelement und der erste Endabschnitt um eine gleich lange Verschiebungslänge verschoben werden.

Es kann vorgesehen sein, dass die Spannvorrichtung ein Führungselement, insbesondere einen Führungskanal, aufweist, welches dazu eingerichtet ist, den Lichtleiter zumindest abschnittsweise entlang der Spannrichtung zu führen, wobei vorzugsweise das Führungselement derart ausgestaltet ist, dass der geführte Lichtleiterabschnitt an dem Führungselement, oder durch das Führungselement hindurch, verschiebbar gehalten wird, wobei das Spannelement zwischen dem Führungselement und dem Spannabschnitt des Trägerelements angeordnet ist und relativ zu dem Führungselement verschiebbar gelagert ist.

Es kann vorgesehen sein, dass die Spannvorrichtung ein Verschiebemittel aufweist, welches relativ zu dem Spannelement bewegbar ist, und vorzugsweise mit dem Spannelement in Eingriff ist, wobei das Verschiebemittel dazu eingerichtet ist, an einer Anpressfläche des Führungselements anzugreifen, wobei das Spannelement mit dem Führungselement über das Verschiebemittel derart wirkverbunden ist, dass eine Bewegung, insbesondere eine Rotation, des Verschiebemittels relativ zu dem Spannelement in eine Verschiebung des Spannelements entlang der Spannrichtung umgesetzt wird. Das Verschiebemittel ist bevorzugt durch eine Durchgangsöffnung des Spannelements hindurch bewegbar.

Es kann vorgesehen sein, dass das Verschiebemittel eine Schraube ist, welche zur Verschiebung des Spannelements durch eine, zu der Schraube komplementär ausgestaltete, Gewindeöffnung des Spannelements schraubbar ist, wobei ein Schraubenende, welches einem Schraubkopf der Schaube abgewandt ist, dazu eingerichtet ist, an der Anpressfläche des Führungselements anzugreifen, wobei durch ein Einschrauben der Schraube in die Gewindeöffnung das Angreifen des Schraubenendes an der Anpressfläche induziert und in eine Verschiebung des Spannelements entlang der Spannrichtung umgesetzt wird.

Es kann vorgesehen sein, dass das Führungselement mit dem Trägerelement, insbesondere ortsfest, verbunden ist.

Es kann vorgesehen sein, dass der zweite Endabschnitt eine weitere Lichteinkoppelfläche aufweist, wobei vorzugsweise die weitere Lichteinkoppelfläche orthogonal auf die Lichtleiter-Mantelfläche orientiert ist.

Es kann vorgesehen sein, dass der Halteabschnitt eine bombierte Form aufweist. Dadurch kann ein Spannen des Lichtleiters bzw. ein durch das Spannen umgesetzte Anpressen der Lichtleiter-Mantelfläche an dem Halteabschnitt besonders effizient erfolgen. Nach dem Spannen kann die Lichtleiter-Mantelfläche dem Halteabschnitt folgen bzw. an diesem fest anliegen.

Es kann vorgesehen sein, dass der erste Endabschnitt des Lichtleiters in einen Aufnahmeabschnitt des Spannelements mündet, wobei der Aufnahmeabschnitt eine zu dem Lichtleiter korrespondierende Form aufweist, wobei der Aufnahmeabschnitt den ersten Endabschnitt zumindest teilweise, bevorzugt umfangseitig vollständig, umschließt.

Es kann vorgesehen sein, dass der Eingriffsabschnitt des ersten Endabschnitts des Lichtleiters als Kontaktfläche, welche insbesondere parallel zur Lichteinkoppelfläche des ersten Endabschnitts orientiert ist, ausgebildet ist, wobei das Spannelement eine mit der Kontaktfläche kontaktierbare Gegen-Kontaktfläche aufweist, wobei wenn die Kontaktfläche des ersten Endabschnitts die Gegenkontaktfläche des Spannelements kontaktiert, die Verschiebung des Spannelements entlang der Spannrichtung auf den ersten Endabschnitt des Lichtleiters übertragen wird.

Es kann vorgesehen sein, dass der Halteabschnitt als eine zu der Lichtleiter-Mantelfläche korrespondierend ausgeformte Wandung ausgebildet ist, welche derart ausgestaltet ist, dass höchstens die Hälfte des Umfangs der Lichtleiter-Mantelfläche umfangseitig durch die Wandung umhüllt ist.

Es kann vorgesehen sein, dass an einem von dem Halteabschnitt freiliegenden Abschnitt der Lichtleiter-Mantelfläche die Lichtauskoppelfläche ausgebildet ist.

Es kann vorgesehen sein, dass das Trägerelement ein optisches Element, insbesondere eine Dickwandoptik, aufweist, welches eine Lichteintrittsfläche und eine Lichtaustrittsfläche aufweist, wobei das optische Element an dem Trägerelement derart angeordnet ist, dass aus der Lichtauskoppelfläche des Lichtleiters ausgekoppeltes Licht über die Lichteintrittsfläche des optischen Elements in das optische Element eingekoppelt wird. Der Lichtleiter bzw. das Licht des Lichtleiters kann zusammen mit dem optischen Element beispielsweise einen Fahrtrichtungsanzeiger oder eine Warnleuchte ausbilden.

Es kann vorgesehen sein, dass das optische Element an dem Trägerelement derart angeordnet ist, dass der Lichtleitkörper zumindest abschnittsweise zwischen dem Halteabschnitt und dem optischen Element angeordnet ist.

Es kann vorgesehen sein, dass das Trägerelement eine erste Lichtquelle aufweist, welche an dem Trägerelement, bevorzugt an dem Spannabschnitt des Trägerelements, derart angeordnet ist, dass von der Lichtquelle emittiertes Licht in die Lichteinkoppelfläche des ersten Endabschnitts des Lichtleiters einkoppelbar ist, wobei vorzugsweise die erste Lichtquelle der Lichteinkoppelfläche gegenüberliegend, mit einem Abstand größer null, angeordnet ist.

Es kann vorgesehen sein, dass das Trägerelement eine zweite Lichtquelle aufweist, welche an dem Befestigungsabschnitt des Trägerelements angeordnet ist, wobei der zweite Endabschnitt des Lichtleiters eine weitere Lichteinkoppelfläche aufweist, wobei die zweite Lichtquelle derart angeordnet und dazu eingerichtet ist, Licht in die weitere Lichteinkoppelfläche des zweiten Endabschnitts des Lichtleiters einzukoppeln, wobei vorzugsweise die zweite Lichtquelle der weiteren Lichteinkoppelfläche gegenüberliegend, mit einem Abstand größer null, angeordnet ist.

Es kann vorgesehen sein, dass die erste Lichteinkoppelfläche des ersten Endabschnitts orthogonal auf die Lichtleiter-Mantelfläche orientiert ist.

Es kann vorgesehen sein, dass der Normalabstand der Lichteinkoppelfläche des ersten Endabschnitts zu dem Spannabschnitt des Trägerelements größer Null ist, wobei der Normalabstand vor der Verschiebung des ersten Endabschnitts durch die Spannvorrichtung größer ist als nach dessen Verschiebung, wobei vorzugsweise die Verschiebung derart ist, dass eine temperaturbedingte Längenausdehnung des Lichtleiters kompensiert wird.

Erfindungsgemäß ist weiters eine Beleuchtungsvorrichtung für ein Kraftfahrzeug, umfassend ein System vorgesehen, wobei die Beleuchtungsvorrichtung beispielsweise einen Kraftfahrzeugscheinwerfer, ein Rücklicht, ein Bremslicht oder ein Signallicht umfasst.

### Kurzbeschreibung der Figuren

Nachfolgend wird die Erfindung anhand von beispielhaften Zeichnungen näher erläutert. Hierbei zeigt
Fig. 1a eine perspektivische Ansicht einer Ausführungsform eines erfindungsgemäßen Systems;
Fig. 1b eine weitere Ansicht des Systems gemäß Fig. 1;
Fig. 2 eine Detailansicht des Systems gemäß Fig. 1;
Fig. 3 eine weitere Detailansicht des Systems gemäß Fig. 1;
Fig. 4 eine Schnittansicht der Detailansicht gemäß Fig. 3; und
Fig. 5 eine Detailansicht des Schnitts B-B' in Fig. 1.

### Eingehende Beschreibung der Ausführungsformen

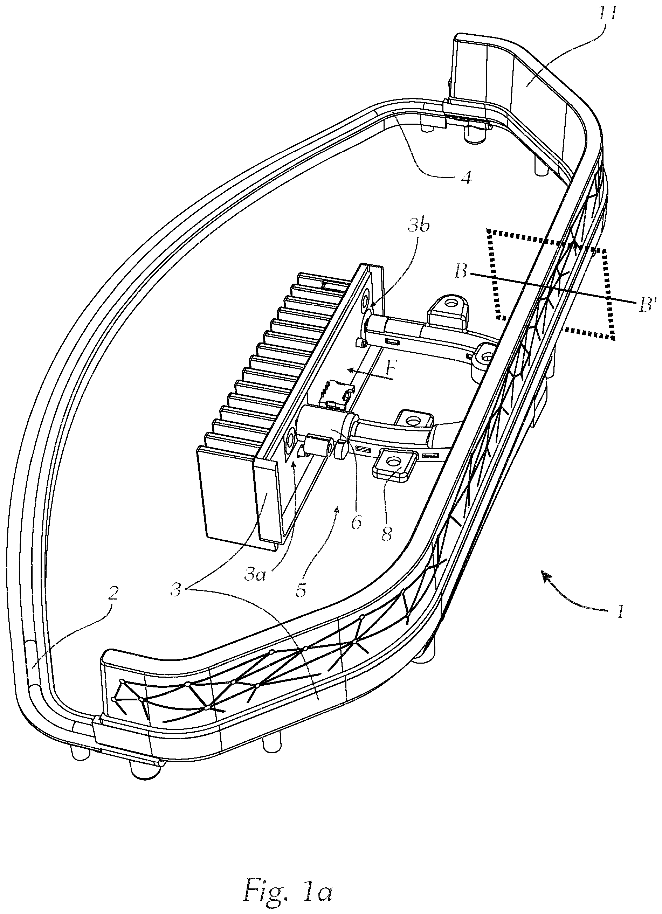

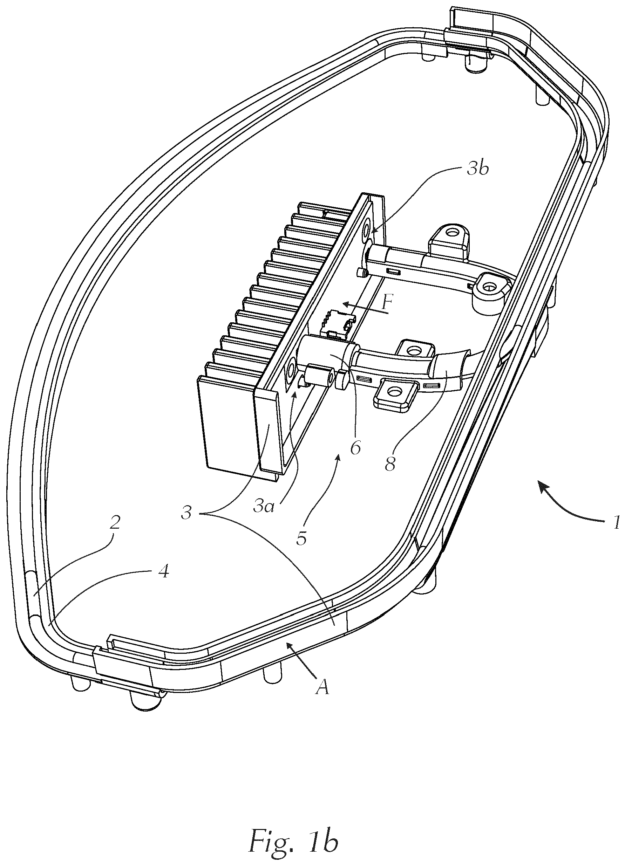

Fig. 1a und Fig. 1b zeigen jeweils ein System 1 zum Befestigen und Spannen eines Lichtleiters 2 an einem Trägerelement 3.

Das System 1 umfasst einen Lichtleiter 2, vorzugsweise eine Lichtleitfaser oder eine Glasfaser, wobei der Lichtleiter 2 einen ersten Endabschnitt 2a, einen zweiten Endabschnitt 2b, und einen zwischen dem ersten Endabschnitt 2a und dem zweiten Endabschnitt 2b ausgebildeten Lichtleiterkörper 2c aufweist. Der Lichtleiterkörper 2c kann beispielsweise im Wesentlichen zylinderförmig ausgestaltet sein. Zumindest der erste Endabschnitt 2a weist eine Lichteinkoppelfläche 2a1 auf, über welche Licht einer Lichtquelle in den Lichtleiter 2 einkoppelbar ist. Eine den Lichtleiterkörper 2c begrenzende Lichtleiter-Mantelfläche 2c1 ist zumindest abschnittsweise als Lichtauskoppelfläche 2c2 ausgebildet, über welche in den Lichtleiter, durch dessen Lichteinkoppelfläche 2a1, eingekoppeltes Licht auskoppelbar ist. Die erste Lichteinkoppelfläche 2a1 des ersten Endabschnitts 2a ist bevorzugt orthogonal auf die Lichtleiter-Mantelfläche 2c1 orientiert.

Das System 1 umfasst weiters ein Trägerelement 3 mit einem Halteabschnitt 4, an welchem die Lichtleiter-Mantelfläche 2c1 zumindest abschnittsweise aufliegt und welcher derart ausgestaltet ist, dass die aufliegende Lichtleiter-Mantelfläche 2c1 von dem Halteabschnitt 4 umfangseitig zumindest teilweise umhüllt ist. Der Halteabschnitt 4 kann als eine zu der Lichtleiter-Mantelfläche 2c1 korrespondierend ausgeformte Wandung ausgebildet sein, welche derart ausgestaltet ist, dass höchstens die Hälfte des Umfangs der Lichtleiter-Mantelfläche 2c1 umfangseitig durch die Wandung umhüllt ist. Damit kann eine besonders hohe Leuchtkraft realisiert werden, da mehr als die Hälfte der Lichtleiter-Mantelfläche 2c1 frei liegt und damit Licht emittieren kann. Die Lichtauskoppelfläche 2c2 ist bevorzugt an einem von dem Halteabschnitt 4 freiliegenden Abschnitt der Lichtleiter-Mantelfläche 2c1 ausgebildet.

Das Trägerelement 3 hat einen Befestigungsabschnitt 3b und einen Spannabschnitt 3a. An dem Spannabschnitt 3a ist der erste Endabschnitt 2a des Lichtleiters 2 verschiebbar gehalten. An dem Befestigungsabschnitt 3b ist der zweite Endabschnitt 2b des Lichtleiters, insbesondere ortsfest, befestigt.

In Fig. 1a umfasst das Trägerelement 3 ein optisches Element 11, insbesondere eine Dickwandoptik. In Fig. 1b ist das optische Element 11 nicht gezeigt.

Das optische Element 11 hat eine Lichteintrittsfläche 11a und eine Lichtaustrittsfläche. Das optische Element ist an dem Trägerelement 3 derart angeordnet, dass aus der Lichtauskoppelfläche 2c2 des Lichtleiters 2 ausgekoppeltes Licht über die Lichteintrittsfläche 11a des optischen Elements in das optische Element eingekoppelt wird. Damit kann beispielsweise eine Lichtfunktion eines Fahrrichtungsanzeiger realisiert werden. Das optische Element ist an dem Trägerelement 3 derart angeordnet, dass der Lichtleitkörper 2c zumindest abschnittsweise, insbesondere dessen Lichtauskoppelfläche, zwischen dem Halteabschnitt 4 und dem optischen Element angeordnet ist.

Das System 1 umfasst weiters eine Spannvorrichtung 5, welche dazu eingerichtet ist, den ersten Endabschnitt 2a des Lichtleiters 2 relativ zu dem Spannabschnitt 3a des Trägerelements 3, durch Wirkung einer Spannkraft F, entlang einer Spannrichtung S zu verschieben. Dadurch wird der Lichtleiter 2 relativ zu dem Spannabschnitt 3a des Trägerelements 3 gespannt. Bei der Verschiebung wird ein Normalabstand, welcher größer null ist, der Lichteinkoppelfläche 2a1 des ersten Endabschnitts 2a zu dem Spannabschnitt 3a des Trägerelements 3 verringert. Der Halteabschnitt 4 und der Spannabschnitt 3a sind derart ausgestaltet, dass durch die auf den ersten Endabschnitt 2a, in Richtung Spannabschnitt 3a, wirkende Spannkraft F eine Anpresskraft A auf die Lichtleiter-Mantelfläche 2c1 umgesetzt wird. Durch die Anpresskraft A wird die an dem Halteabschnitt 4 aufliegende Lichtleiter-Mantelfläche 2c1 an den Halteabschnitt 4 angepresst. In dem gezeigten Ausführungsbeispiel hat der Halteabschnitt 4 eine bombierte Form.

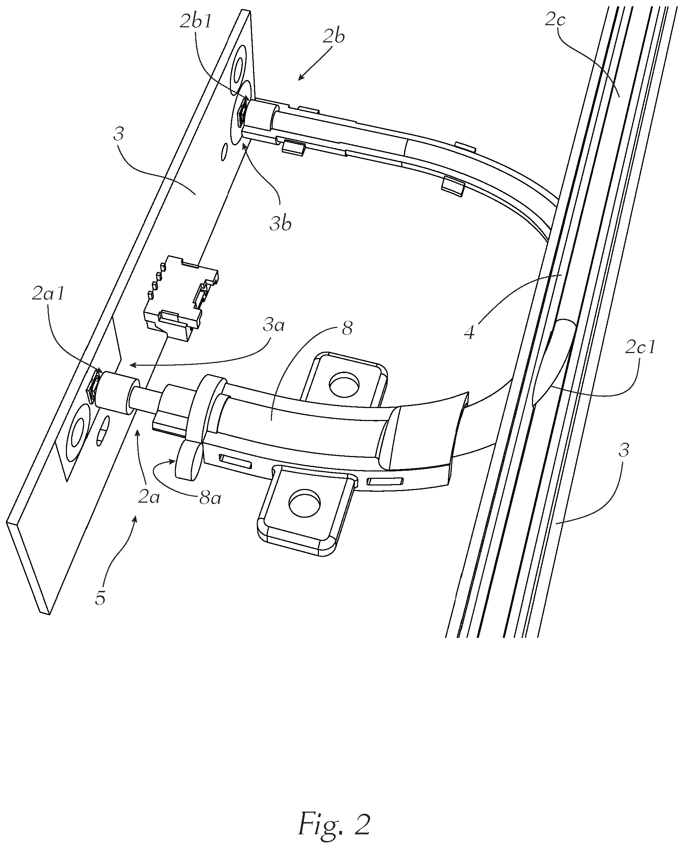

Die Fig. 2 bis 4 zeigen detaillierte Ansichten der Spannvorrichtung 5, deren Funktionsweise anhand eines Ausführungsbeispiels nun näher beschrieben wird. Die beispielshafte Spannvorrichtung 5 hat ein linear verschiebbares, bevorzugt ein am Trägerelement 3 linear verschiebbar gelagertes, Spannelement 6. Dieses ist dazu eingerichtet, in einen Eingriffsabschnitt 7 des ersten Endabschnitts 2a des Lichtleiters 2 einzugreifen. Durch diesen Eingriff wird eine lineare Verschiebung des Spannelements 6 auf den ersten Endabschnitt 2a übertragen. Durch die lineare Verschiebung des Spannelements 6 entlang der Spannrichtung S kann der, sich mit dem Spannelement 6 in Eingriff befindliche, erste Endabschnitt 2a des Lichtleiters 2 in Richtung des Spannabschnitts 3a des Trägerelements 3 verschoben werden. Diese Verschiebung erfolgt insbesondere simultan mit der Verschiebung des Spannelements 6. Das Spannelement 6 und der erste Endabschnitt 2a werden im Wesentlichen um eine gleich lange Verschiebungslänge verschoben.

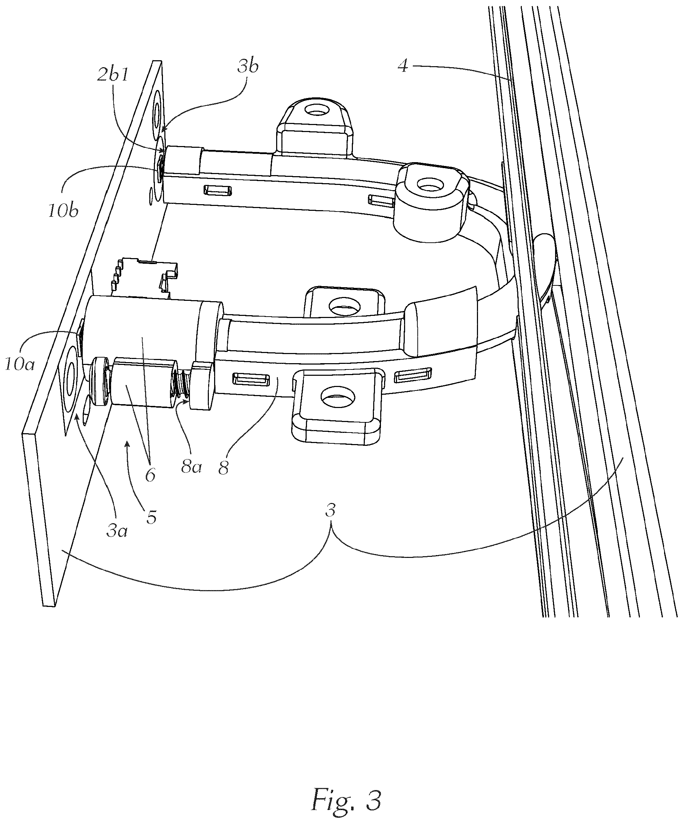

In Fig. 2 ist die Spannvorrichtung 5 ohne Spannelement 6 gezeigt. Der erste Endabschnitt 2a ist in Fig. 2 somit freiliegend gezeigt. In Fig. 3 ist das Spannelement 6 funktionsgemäß an der Spannvorrichtung 5 angeordnet. Gezeigt ist jeweils der ungespannte Zustand.

Die Spannvorrichtung 5 kann ein Führungselement 8, insbesondere einen Führungskanal, aufweisen. Das Führungselement 8 bzw. der Führungskanal ist dazu eingerichtet, den Lichtleiter 2 zumindest abschnittsweise entlang der Spannrichtung S zu führen. Bevorzugt ist das Führungselement 8 mit dem Trägerelement 3, insbesondere ortsfest, verbunden. Dazu ist das Führungselement 8 derart ausgestaltet, dass der geführte Lichtleiterabschnitt an dem Führungselement 8, oder durch das Führungselement 8 hindurch, verschiebbar gehalten wird. Das Spannelement 6 ist zwischen dem Führungselement 8 und dem Spannabschnitt 3a des Trägerelements 3 angeordnet und relativ zu dem Führungselement 8 verschiebbar gelagert.

Die Spannvorrichtung 5 umfasst ein Verschiebemittel 9, welches relativ zu dem Spannelement 6 bewegbar ist. Vorzugsweise ist das Verschiebemittel 9 mit dem Spannelement 6 in Eingriff bzw. damit wirkverbunden. Das Verschiebemittel 9 ist dazu eingerichtet, an einer Anpressfläche 8a des Führungselements 8 anzugreifen. Das Spannelement 6 ist weiters mit dem Führungselement 8 über das Verschiebemittel 9 derart wirkverbunden, dass eine Bewegung, insbesondere eine Rotation, des Verschiebemittels 9 relativ zu dem Spannelement 6 in eine Verschiebung des Spannelements 6 entlang der Spannrichtung S umgesetzt wird.

Bevorzugt ist das Verschiebemittel 9 eine Schraube, welche zur Verschiebung des Spannelements 6 durch eine, zu der Schraube komplementär ausgestaltete, Gewindeöffnung des Spannelements 6 schraubbar ist. Ein Schraubenende, welches dem Schraubkopf der Schaube abgewandt ist, ist dazu eingerichtet, an der Anpressfläche 8a des Führungselements 8 anzugreifen. Durch ein Einschrauben der Schraube in die Gewindeöffnung wird das Angreifen des Schraubenendes an der Anpressfläche 8a induziert und in weiterer Folge in eine Verschiebung des Spannelements 6 entlang der Spannrichtung S umgesetzt. Bis zu dem Zeitpunkt, an welchem das Schraubenende die Anpressfläche 8a kontaktiert, wird die Schraube entgegen der Spannrichtung S in die Gewindeöffnung geschraubt. Sobald die Schraube die Anpressfläche 8a kontaktiert, wird durch weiteres Schrauben in die gleiche Schraubrichtung das Spannelement 6 von dem Führungselement 8 bzw. von der Anpressfläche 8a weggedrückt. Dadurch kommt es zu der oben beschriebenen Verschiebung des ersten Endabschnitts 2a in Richtung Spannabschnitt 3a.

Der zweite Endabschnitt 2b kann eine weitere Lichteinkoppelfläche 2b1 aufweisen, wobei vorzugsweise die weitere Lichteinkoppelfläche 2b1 orthogonal auf die Lichtleiter-Mantelfläche 2c1 orientiert ist.

Der erste Endabschnitt 2a des Lichtleiters 2 mündet in einen Aufnahmeabschnitt des Spannelements 6, wobei der Aufnahmeabschnitt eine zu dem Lichtleiter 2 (bzw. eine zu dem ersten Endabschnitt 2a des Lichtleiters 2) korrespondierende Form aufweist. Der Aufnahmeabschnitt umschließt den ersten Endabschnitt 2a umfangseitig zumindest teilweise, bevorzugt umfangseitig vollständig.

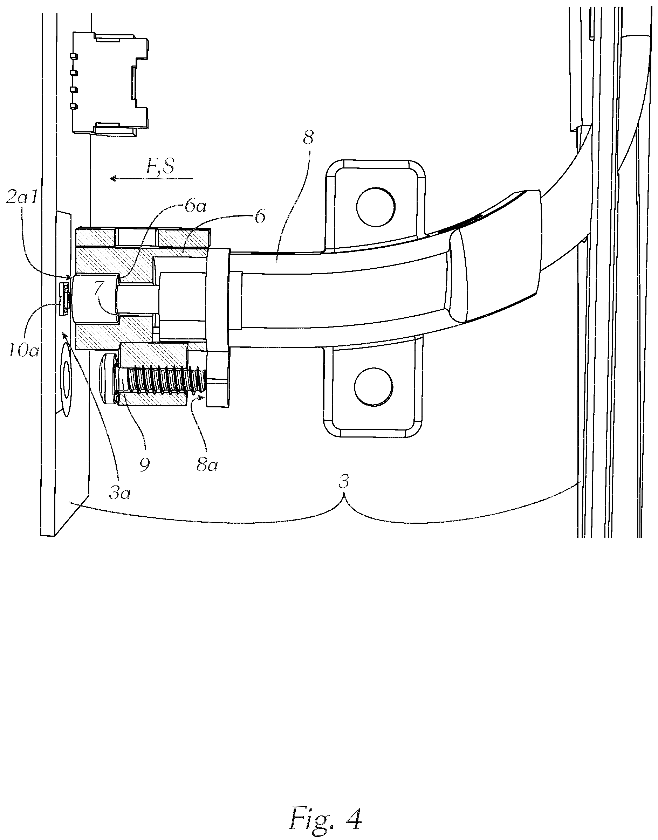

Nun wird der in dem gezeigten Ausführungsbeispiel verwendete Mitnahmemechanismus (bzw. Verschiebemechanismus) des Lichtleiters näher beschrieben. Details sind Fig. 4 zu entnehmen (diese zeigt einen in Einbaulage horizontalen Schnitt durch die in Fig. 3 gezeigte Detailansicht). Der Eingriffsabschnitt 7 des ersten Endabschnitts 2a des Lichtleiters 2 ist als Kontaktfläche, welche insbesondere parallel zur Lichteinkoppelfläche 2a1 des ersten Endabschnitts 2a orientiert ist, ausgebildet. Das Spannelement 6 hat eine mit der Kontaktfläche kontaktierbare Gegen-Kontaktfläche 6a. Wenn die Kontaktfläche des ersten Endabschnitts 2a die Gegenkontaktfläche 6a des Spannelements 6 kontaktiert, kann die Verschiebung des Spannelements 6 entlang der Spannrichtung S auf den ersten Endabschnitt 2a des Lichtleiters 2, im Wesentlichen durch einen Kraftschluss, übertragen werden.

Das Trägerelement 3 kann eine erste Lichtquelle 10a aufweisen, welche an dem Trägerelement 3, bevorzugt an dem Spannabschnitt 3a des Trägerelements 3, derart angeordnet ist, dass von der Lichtquelle 10a emittiertes Licht in die Lichteinkoppelfläche 2a1 des ersten Endabschnitts 2a des Lichtleiters 2 einkoppelbar ist. Die erste Lichtquelle 10a kann der Lichteinkoppelfläche 2a1 gegenüberliegend, mit einem Abstand größer null, angeordnet sein. Die erste Lichtquelle 10a kann auch an einer zur Ansteuerung der Lichtquelle ausgebildeten Leiterplatte angeordnet sein, wobei die Leiterplatte an dem Trägerelement 3 befestigt sein kann. Die Leiterplatte und/oder die Lichtquelle können zwischen dem ersten Endabschnitt 2a und dem Trägerelement 3 angeordnet sein.

Das Trägerelement 3 kann eine zweite Lichtquelle 10b aufweisen, welche an dem Befestigungsabschnitt 3b des Trägerelements 3 angeordnet ist. Der zweite Endabschnitt 2b des Lichtleiters 2 kann eine weitere Lichteinkoppelfläche 2b1 aufweist, wobei die zweite Lichtquelle 10b derart angeordnet und dazu eingerichtet ist, Licht in die weitere Lichteinkoppelfläche 2b1 des zweiten Endabschnitts 2b des Lichtleiters (2) einzukoppeln. Die zweite Lichtquelle 10b kann der weiteren Lichteinkoppelfläche 2b1 gegenüberliegend, mit einem Abstand größer null, angeordnet sein.

Der Normalabstand der Lichteinkoppelfläche 2a1 des ersten Endabschnitts 2a zu dem Spannabschnitt 3a des Trägerelements 3 ist größer Null, wobei der Normalabstand vor der Verschiebung des ersten Endabschnitts 2a durch die Spannvorrichtung 5 größer ist als nach dessen Verschiebung. Die Verschiebung kann derart sein, dass eine temperaturbedingte Längenausdehnung des Lichtleiters 2 kompensiert wird.

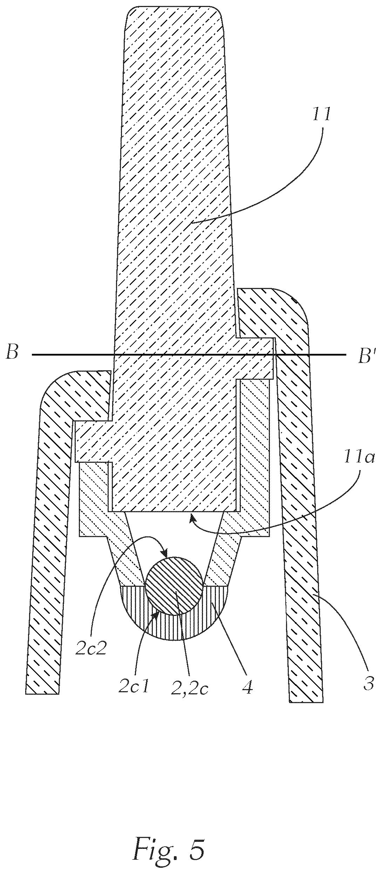

In Fig. 5 ist eine Detailansicht des Schnitts B-B' in Fig. 1 gezeigt. Die Lichtleiter-Mantelfläche 2c1 des Lichtleiterkörpers 2c liegt umfangseitig abschnittweise in dem Halteabschnitt 4 des Trägerelements 3. Die Lichtauskoppelfläche 2c2 des Lichtleiterkörpers 2c ist einer Lichteinkoppelfläche 11a des optischen Elements 11 zugewandt. Das optische Element 11 ist an dem Trägerelement 3 befestigt. Der Lichtleiterkörpers 2c ist somit zwischen dem optischen Element 11 und dem Halteabschnitt 4 des Trägerelements 3 angeordnet.

### LISTE DER BEZUGSZEICHEN

- 1: System
- 2: Lichtleiter
- 2a: erster Endabschnitt (des Lichtleiters)
- 2a1: Lichteinkoppelfläche (des ersten Endabschnitts)
- 2b: zweiter Endabschnitt (des Lichtleiters)
- 2b1: Lichteinkoppelfläche (des zweiten Endabschnitts)
- 2c: Lichtleiterkörper
- 2c1: Lichtleiter-Mantelfläche
- 2c2: Lichtauskoppelfläche (des Lichtleiterkörpers)
- 3: Trägerelement
- 3a: Spannabschnitt (des Trägerelements)
- 3b: Befestigungsabschnitt (des Trägerelements)
- 4: Halteabschnitt (des Trägerelements)
- 5: Spannvorrichtung
- 6: Spannelement
- 6a: Gegenkontaktfläche (des Spannelements)
- 7: Eingriffsabschnitt (des ersten Endabschnitt des Lichtleiters)
- 8: Führungselement (der Spannvorrichtung)
- 8a: Anpressfläche (des Führungselements)
- 9: Verschiebemittel (der Spannvorrichtung) (=Schraube)
- 10a: erste Lichtquelle
- 10b: zweite Lichtquelle
- 11: Optisches Element
- 11a: Lichteinkoppelfläche (des optischen Elements)
- F: Spannkraft
- S: Spannrichtung
- A: Anpresskraft
- B,B': Achse des Schnitts in Fig.1a und Fig.5

## Patentansprüche

1. System (1) zum Befestigen und Spannen eines Lichtleiters (2) an einem Trägerelement (3), umfassend:
* einen Lichtleiter (2), vorzugsweise eine Lichtleitfaser, wobei der Lichtleiter (2) einen ersten Endabschnitt (2a), einen zweiten Endabschnitt (2b), und einen zwischen dem ersten Endabschnitt (2a) und dem zweiten Endabschnitt (2b) ausgebildeten Lichtleiterkörper (2c) aufweist, wobei vorzugsweise der Lichtleiterkörper (2c) im Wesentlichen zylinderförmig ausgestaltet ist, wobei zumindest der erste Endabschnitt (2a) eine Lichteinkoppelfläche (2a1) aufweist, über welche Licht einer Lichtquelle in den Lichtleiter (2) einkoppelbar ist, wobei eine den Lichtleiterkörper (2c) begrenzende Lichtleiter-Mantelfläche (2c1) zumindest abschnittsweise als Lichtauskoppelfläche (2c2) ausgebildet ist, über welche in den Lichtleiter, durch dessen Lichteinkoppelfläche (2a1), eingekoppeltes Licht auskoppelbar ist,
* ein Trägerelement (3), umfassend einen Halteabschnitt (4), an welchem die Lichtleiter-Mantelfläche (2c1) zumindest abschnittsweise aufliegt und welcher derart ausgestaltet ist, dass die aufliegende Lichtleiter-Mantelfläche (2c1) von dem Halteabschnitt (4) umfangseitig zumindest teilweise umhüllt ist, wobei das Trägerelement (3) einen Befestigungsabschnitt (3b) und einen Spannabschnitt (3a) aufweist, wobei an dem Spannabschnitt (3a) der erste Endabschnitt (2a) des Lichtleiters (2) verschiebbar gehalten ist, wobei an dem Befestigungsabschnitt (3b) der zweite Endabschnitt (2b) des Lichtleiters, insbesondere ortsfest, befestigt ist,
* eine Spannvorrichtung (5), welche dazu eingerichtet ist, den ersten Endabschnitt (2a) des Lichtleiters (2) relativ zu dem Spannabschnitt (3a) des Trägerelements (3), durch Wirkung einer Spannkraft (F), entlang einer Spannrichtung (S) zu verschieben, wodurch der Lichtleiter (2) relativ zu dem Spannabschnitt (3a) des Trägerelements (3) gespannt wird, wobei bei der Verschiebung ein Normalabstand, welcher größer null ist, der Lichteinkoppelfläche (2a1) des ersten Endabschnitts (2a) zu dem Spannabschnitt (3a) des Trägerelements (3) verringert wird, wobei der Halteabschnitt (4) und der Spannabschnitt (3a) derart ausgestaltet sind, dass durch die auf den ersten Endabschnitt (2a), in Richtung Spannabschnitt (3a), wirkende Spannkraft (F) eine Anpresskraft (A) auf die Lichtleiter-Mantelfläche (2c1) umgesetzt wird, durch welche die an dem Halteabschnitt (4) aufliegende Lichtleiter-Mantelfläche (2c) an den Halteabschnitt (4) angepresst wird.

2. System nach Anspruch 1, wobei die Spannvorrichtung (5) ein linear verschiebbares, bevorzugt ein am Trägerelement (3) linear verschiebbar gelagertes, Spannelement (6) aufweist, welches dazu eingerichtet ist, in einen Eingriffsabschnitt (7) des ersten Endabschnitts (2a) des Lichtleiters (2) einzugreifen, wobei durch den Eingriff eine lineare Verschiebung des Spannelements (6) auf den ersten Endabschnitt (2a) übertragen wird, wobei durch die lineare Verschiebung des Spannelements (6) entlang der Spannrichtung (S) der mit dem Spannelement (6) in Eingriff befindliche erste Endabschnitt (2a) des Lichtleiters (2), insbesondere simultan mit dem Spannelement (6), in Richtung des Spannabschnitts (3a) des Trägerelements (3) verschoben wird, wobei vorzugsweise das Spannelement (6) und der erste Endabschnitt (2a) um eine gleich lange Verschiebungslänge verschoben werden.

3. System nach Anspruch 2, wobei die Spannvorrichtung (5) ein Führungselement (8), insbesondere einen Führungskanal, aufweist, welches dazu eingerichtet ist, den Lichtleiter (2) zumindest abschnittsweise entlang der Spannrichtung (S) zu führen, wobei vorzugsweise das Führungselement (8) derart ausgestaltet ist, dass der geführte Lichtleiterabschnitt an dem Führungselement (8), oder durch das Führungselement (8) hindurch, verschiebbar gehalten wird, wobei das Spannelement (6) zwischen dem Führungselement (8) und dem Spannabschnitt (3a) des Trägerelements (3) angeordnet ist und relativ zu dem Führungselement (8) verschiebbar gelagert ist, wobei vorzugsweise das Führungselement (8) mit dem Trägerelement (3), insbesondere ortsfest, verbunden ist.

4. System nach Anspruch 3, wobei die Spannvorrichtung (5) ein Verschiebemittel (9) aufweist, welches relativ zu dem Spannelement (6) bewegbar ist, und vorzugsweise mit dem Spannelement (6) in Eingriff ist, wobei das Verschiebemittel (9) dazu eingerichtet ist, an einer Anpressfläche (8a) des Führungselements (8) anzugreifen, wobei das Spannelement (6) mit dem Führungselement (8) über das Verschiebemittel (9) derart wirkverbunden ist, dass eine Bewegung, insbesondere eine Rotation, des Verschiebemittels (9) relativ zu dem Spannelement (6) in eine Verschiebung des Spannelements (6) entlang der Spannrichtung (S) umgesetzt wird, wobei vorzugsweise das Verschiebemittel (9) eine Schraube ist, welche zur Verschiebung des Spannelements (6) durch eine, zu der Schraube komplementär ausgestaltete, Gewindeöffnung des Spannelements (6) schraubbar ist, wobei ein Schraubenende, welches einem Schraubkopf der Schaube abgewandt ist, dazu eingerichtet ist, an der Anpressfläche (8a) des Führungselements (8) anzugreifen, wobei durch ein Einschrauben der Schraube in die Gewindeöffnung das Angreifen des Schraubenendes an der Anpressfläche (8a) induziert und in eine Verschiebung des Spannelements (6) entlang der Spannrichtung umgesetzt wird.

5. System nach einem der vorhergehenden Ansprüche, wobei der zweite Endabschnitt (2b) eine weitere Lichteinkoppelfläche (2b1) aufweist, wobei vorzugsweise die weitere Lichteinkoppelfläche (2b1) orthogonal auf die Lichtleiter-Mantelfläche (2c1) orientiert ist.

6. System nach einem der vorhergehenden Ansprüche, wobei der Halteabschnitt (4) eine bombierte Form aufweist.

7. System nach einem der Ansprüche 2 bis 6, wobei der erste Endabschnitt (2a) des Lichtleiters (2) in einen Aufnahmeabschnitt des Spannelements (6) mündet, wobei der Aufnahmeabschnitt eine zu dem Lichtleiter (2) korrespondierende Form aufweist, wobei der Aufnahmeabschnitt den ersten Endabschnitt (2a) zumindest teilweise, bevorzugt umfangseitig vollständig, umschließt.

8. System nach einem der Ansprüche 2 bis 7, wobei der Eingriffsabschnitt (7) des ersten Endabschnitts (2a) des Lichtleiters (2) als Kontaktfläche, welche insbesondere parallel zur Lichteinkoppelfläche (2a1) des ersten Endabschnitts (2a) orientiert ist, ausgebildet ist, wobei das Spannelement (6) eine mit der Kontaktfläche kontaktierbare Gegen-Kontaktfläche (6a) aufweist, wobei wenn die Kontaktfläche des ersten Endabschnitts (2a) die Gegenkontaktfläche (6a) des Spannelements (6) kontaktiert, die Verschiebung des Spannelements (6) entlang der Spannrichtung (S) auf den ersten Endabschnitt (2a) des Lichtleiters (2) übertragen wird.

9. System nach einem der vorhergehenden Ansprüche, wobei der Halteabschnitt (4) als eine zu der Lichtleiter-Mantelfläche (2c1) korrespondierend ausgeformte Wandung ausgebildet ist, welche derart ausgestaltet ist, dass höchstens die Hälfte des Umfangs der Lichtleiter-Mantelfläche (2c1) umfangseitig durch die Wandung umhüllt ist, wobei vorzugsweise an einem von dem Halteabschnitt (4) freiliegenden Abschnitt der Lichtleiter-Mantelfläche (2c1) die Lichtauskoppelfläche (2c2) ausgebildet ist.

10. System nach einem der vorhergehenden Ansprüche, wobei das Trägerelement (3) ein optisches Element (11), insbesondere eine Dickwandoptik, aufweist, welches eine Lichteintrittsfläche (11a) und eine Lichtaustrittsfläche aufweist, wobei das optische Element an dem Trägerelement (3) derart angeordnet ist, dass aus der Lichtauskoppelfläche (2c2) des Lichtleiters (2) ausgekoppeltes Licht über die Lichteintrittsfläche (11a) des optischen Elements in das optische Element eingekoppelt wird, wobei vorzugsweise das optische Element an dem Trägerelement (3) derart angeordnet ist, dass der Lichtleitkörper (2c) zumindest abschnittsweise zwischen dem Halteabschnitt (4) und dem optischen Element angeordnet ist.

11. System nach einem der vorhergehenden Ansprüche, wobei das Trägerelement (3) eine erste Lichtquelle (10a) aufweist, welche an dem Trägerelement (3), bevorzugt an dem Spannabschnitt (3a) des Trägerelements (3), derart angeordnet ist, dass von der Lichtquelle (10a) emittiertes Licht in die Lichteinkoppelfläche (2a1) des ersten Endabschnitts (2a) des Lichtleiters (2) einkoppelbar ist, wobei vorzugsweise die erste Lichtquelle (10a) der Lichteinkoppelfläche (2a1) gegenüberliegend, mit einem Abstand größer null, angeordnet ist.

12. System nach einem der vorhergehenden Ansprüche, wobei das Trägerelement (3) eine zweite Lichtquelle (10b) aufweist, welche an dem Befestigungsabschnitt (3b) des Trägerelements (3) angeordnet ist, wobei der zweite Endabschnitt (2b) des Lichtleiters (2) eine weitere Lichteinkoppelfläche (2b1) aufweist, wobei die zweite Lichtquelle (10b) derart angeordnet und dazu eingerichtet ist, Licht in die weitere Lichteinkoppelfläche (2b1) des zweiten Endabschnitts (2b) des Lichtleiters (2) einzukoppeln, wobei vorzugsweise die zweite Lichtquelle (10b) der weiteren Lichteinkoppelfläche (2b1) gegenüberliegend, mit einem Abstand größer null, angeordnet ist.

13. System nach einem der vorhergehenden Ansprüche, wobei die erste Lichteinkoppelfläche (2a1) des ersten Endabschnitts (2a) orthogonal auf die Lichtleiter-Mantelfläche (2c1) orientiert ist.

14. System nach einem der vorhergehenden Ansprüche, wobei der Normalabstand der Lichteinkoppelfläche (2a1) des ersten Endabschnitts (2a) zu dem Spannabschnitt (3a) des Trägerelements (3) größer Null ist, wobei der Normalabstand vor der Verschiebung des ersten Endabschnitts (2a) durch die Spannvorrichtung (5) größer ist als nach dessen Verschiebung, wobei vorzugsweise die Verschiebung derart ist, dass eine temperaturbedingte Längenausdehnung des Lichtleiters (2) kompensiert wird.

15. Beleuchtungsvorrichtung für ein Kraftfahrzeug, umfassend ein System (1) nach einem der Ansprüche 1 bis 14, wobei die Beleuchtungsvorrichtung beispielsweise als ein Kraftfahrzeugscheinwerfer, ein Rücklicht, ein Bremslicht oder ein Signallicht ausgestaltet ist, wobei die Beleuchtungsvorrichtung zur Ausbildung einer Lichtfunktion eine Lichtquelle aufweist, wobei die Lichtquelle den Lichtleiter des Systems (1) umfasst.

## Claims

1. System (1) for fastening and tensioning an optical guide (2) to a carrier element (3), comprising:
* an optical guide (2), preferably an optical fiber, wherein the optical guide (2) has a first end section (2a), a second end section (2b), and an optical guide body (2c) formed between the first end section (2a) and the second end section (2b), wherein the light guide body (2c) is preferably designed to be essentially cylindrical, wherein at least the first end section (2a) has a light coupling surface (2a1) via which light from a light source can be coupled into the light guide (2), wherein a light guide jacket surface (2c1) bounding the light guide body (2c) is formed at least in sections as a light decoupling surface (2c2) via which light coupled into the light guide via its light coupling surface (2a1) can be decoupled,
* a carrier element (3) comprising a holding section (4) on which the light guide jacket surface (2c1) rests at least in sections and which is designed in such a way that the resting light guide jacket surface (2c1) is at least partially enclosed by the holding section (4) around its circumference, wherein the carrier element (3) having a fastening section (3b) and a clamping section (3a), the first end section (2a) of the optical fiber (2) being held in a displaceable manner on the clamping section (3a), the second end section (2b) of the optical fiber being fastened, in particular in a fixed manner, on the fastening section (3b),
* a clamping device (5) which is designed to move the first end section (2a) of the light guide (2) relative to the clamping section (3a) of the carrier element (3) along a clamping direction (S) by means of a clamping force (F), whereby the light guide (2) being clamped relative to the clamping section (3a) of the carrier element (3), wherein during the displacement a normal distance which is greater than zero between the light coupling surface (2a1) of the first end section (2a) and the clamping section (3a) of the carrier element (3) is reduced, wherein the holding section (4) and the clamping section (3a) are designed such that the clamping force (F) acting on the first end section (2a) in the direction of the clamping section (3a) is converted into a contact force (A) on the light guide jacket surface (2c1), by which the light guide jacket surface (2c) resting on the holding section (4) is pressed against the holding section (4).

2. System according to claim 1, wherein the clamping device (5) has a linearly displaceable clamping element (6), preferably mounted on the carrier element (3) so as to be linearly displaceable, which is designed to engage in an engagement section (7) of the first end section (2a) of the light guide (2), wherein the engagement transfers a linear displacement of the clamping element (6) to the first end section (2a), wherein the linear displacement of the clamping element (6) along the clamping direction (S) causes the first end section (2a) of the light guide (2) engaged with the clamping element (6) in particular simultaneously with the clamping element (6), in the direction of the clamping section (3a) of the carrier element (3), whereby preferably the clamping element (6) and the first end section (2a) are displaced by an equal displacement length.

3. System according to claim 2, wherein the tensioning device (5) has a guide element (8), in particular a guide channel, which is designed to guide the optical fiber (2) at least in sections along the tensioning direction (S), wherein the guide element (8) is preferably designed such that the guided optical fiber section is held in a displaceable manner on the guide element (8) or through the guide element (8), wherein the tensioning element (6) is arranged between the guide element (8) and the tensioning section (3a) of the carrier element (3) and is mounted so as to be movable relative to the guide element (8), wherein the guide element (8) is preferably connected to the carrier element (3), in particular fixedly.

4. System according to claim 3, wherein the clamping device (5) has a displacement means (9) which is movable relative to the clamping element (6) and preferably engages with the clamping element (6), wherein the displacement means (9) is designed to engage with a contact surface (8a) of the guide element (8), wherein the clamping element (6) is operatively connected to the guide element (8) via the displacement means (9) in such a way that a movement, in particular a rotation, of the displacement means (9) relative to the clamping element (6) is converted into a displacement of the clamping element (6) along the clamping direction (S), wherein the displacement means (9) is preferably a screw which can be screwed through a threaded opening of the clamping element (6) designed to be complementary to the screw in order to displace the clamping element (6), wherein a screw end which is opposite a screw head of the screw is designed to engage with the contact surface (8a) of the guide element (8), wherein screwing the screw into the threaded opening induces the screw end to engage with the contact surface (8a) and is converted into a displacement of the clamping element (6) along the clamping direction.

5. System according to one of the preceding claims, wherein the second end section (2b) has a further light coupling surface (2b1), wherein the further light coupling surface (2b1) is preferably oriented orthogonally to the light guide jacket surface (2c1).

6. System according to one of the preceding claims, wherein the retaining section (4) has a curved shape.

7. System according to one of claims 2 to 6, wherein the first end section (2a) of the light guide (2) opens into a receiving section of the clamping element (6), wherein the receiving section has a shape corresponding to the light guide (2), wherein the receiving section at least partially, preferably completely, surrounds the first end section (2a).

8. System according to one of claims 2 to 7, wherein the engagement section (7) of the first end section (2a) of the light guide (2) is designed as a contact surface which is oriented in particular parallel to the light coupling surface (2a1) of the first end section (2a), wherein the clamping element (6) has a counter-contact surface (6a) that can be contacted with the contact surface, wherein when the contact surface of the first end section (2a) contacts the counter-contact surface (6a) of the clamping element (6), the displacement of the clamping element (6) along the clamping direction (S) is transferred to the first end section (2a) of the light guide (2).

9. System according to one of the preceding claims, wherein the retaining section (4) is designed as a wall formed to correspond to the light guide jacket surface (2c1), which is designed in such a way that at most half of the circumference of the light guide jacket surface (2c1) is enclosed by the wall on the circumference, wherein the light coupling surface (2c2) is preferably formed on a section of the light guide jacket surface (2c1) exposed by the holding section (4).

10. System according to one of the preceding claims, wherein the carrier element (3) has an optical element (11), in particular a thick-walled optic, which has a light entry surface (11a) and a light exit surface, wherein the optical element is arranged on the carrier element (3) in such a way that light coupled out of the light coupling surface (2c2) of the light guide (2) is coupled into the optical element via the light entry surface (11a) of the optical element into the optical element, wherein the optical element is preferably arranged on the carrier element (3) in such a way that the light guide body (2c) is arranged at least in sections between the holding section (4) and the optical element.

11. System according to one of the preceding claims, wherein the carrier element (3) has a first light source (10a) which is arranged on the carrier element (3), preferably on the tensioning section (3a) of the carrier element (3), in such a way that light emitted from the light source (10a) can be coupled into the light coupling surface (2a1) of the first end section (2a) of the light guide (2), wherein the first light source (10a) is preferably arranged opposite the light coupling surface (2a1) at a distance greater than zero.

12. System according to one of the preceding claims, wherein the carrier element (3) has a second light source (10b) which is arranged on the fastening section (3b) of the carrier element (3), wherein the second end section (2b) of the light guide (2) has a further light coupling surface (2b1), wherein the second light source (10b) is arranged and designed in such a way as to couple light into the further light coupling surface (2b1) of the second end section (2b) of the light guide (2), wherein the second light source (10b) is preferably arranged opposite the further light coupling surface (2b1) at a distance greater than zero.

13. System according to one of the preceding claims, wherein the first light coupling surface (2a1) of the first end section (2a) is oriented orthogonally to the light guide jacket surface (2c1).

14. System according to one of the preceding claims, wherein the normal distance between the light coupling surface (2a1) of the first end section (2a) and the clamping section (3a) of the carrier element (3) is greater than zero, wherein the normal distance before displacement of the first end section (2a) by the clamping device (5) is greater than after its displacement, wherein preferably the displacement is such that temperature-induced length expansion of the light guide (2) is compensated.

15. Lighting device for a motor vehicle, comprising a system (1) according to one of claims 1 to 14, wherein the lighting device is designed, for example, as a motor vehicle headlight, a rear light, a brake light, or a signal light, wherein the lighting device has a light source for forming a light function, wherein the light source comprises the light guide of the system (1).

## Revendications

1. Système (1) pour fixer et tendre un guide de lumière (2) sur un élément support (3), comprenant :
* un guide de lumière (2), de préférence une fibre optique, le guide de lumière (2) comportant une première partie d'extrémité (2a), une deuxième partie d'extrémité (2b) et un corps de guide de lumière (2c) formé entre la première partie d'extrémité (2a) et la deuxième partie d'extrémité (2b), le corps de guide de lumière (2c) étant de préférence de forme essentiellement cylindrique, au moins la première partie d'extrémité (2a) comportant une surface de couplage de lumière (2a1) par laquelle la lumière d'une source de lumière peut être couplée dans le guide de lumière (2), une surface d'enveloppe de guide de lumière (2c1) délimitant le corps de guide de lumière (2c) étant conçue au moins par sections comme surface de découplage de lumière (2c2) par l'intermédiaire de laquelle la lumière couplée dans le guide de lumière par sa surface de couplage de lumière (2a1) peut être découplée,
* un élément de support (3) comprenant une partie de maintien (4) sur laquelle repose au moins partiellement la surface d'enveloppe (2c1) du guide de lumière et qui est conçue de telle sorte que la surface d'enveloppe (2c1) du guide de lumière qui repose sur elle est au moins partiellement enveloppée sur son pourtour par la partie de maintien (4), l'élément de support (3) comportant une partie de fixation (3b) et une partie de serrage (3a), la première partie d'extrémité (2a) du guide de lumière (2) étant maintenue de manière coulissante sur la partie de serrage (3a), la deuxième partie d'extrémité (2b) du guide de lumière étant fixée, en particulier de manière fixe, sur la partie de fixation (3b),
* un dispositif de serrage (5) qui est conçu pour déplacer la première partie d'extrémité (2a) du guide de lumière (2) par rapport à la partie de serrage (3a) de l'élément de support (3), sous l'effet d'une force de serrage (F), le long d'une direction de serrage (S), de sorte que le guide de lumière (2) est tendu par rapport à la section de tension (3a) de l'élément de support (3), une distance normale supérieure à zéro entre la surface de couplage de lumière (2a1) de la première section d'extrémité (2a) et la section de tension (3a) de l'élément de support (3) étant réduite lors du déplacement, la section de retenue (4) et la partie de serrage (3a) sont conçues de telle sorte que la force de serrage (F) agissant sur la première partie d'extrémité (2a) en direction de la partie de serrage (3a), une force de pression (A) est exercée sur la surface d'enveloppe (2c1) du guide de lumière, grâce à laquelle la surface d'enveloppe (2c) du guide de lumière reposant sur la partie de maintien (4) est pressée contre la partie de maintien (4).

2. Système selon la revendication 1, dans lequel le dispositif de serrage (5) comporte un élément de serrage (6) déplaçable linéairement, de préférence monté de manière à pouvoir se déplacer linéairement sur l'élément de support (3), qui est agencé pour intervenir dans une partie d'engagement (7) de la première partie d'extrémité (2a) du guide de lumière (2), l'engagement transmettant un déplacement linéaire de l'élément de serrage (6) à la première partie d'extrémité (2a), le déplacement linéaire de l'élément de serrage (6) le long de la direction de serrage (S) entraînant un déplacement de la première partie d'extrémité (2a) du guide de lumière (2) en prise avec l'élément de serrage (6), en particulier simultanément avec l'élément de serrage (6), dans la direction de la section de serrage (3a) de l'élément de support (3), l'élément de serrage (6) et la première section d'extrémité (2a) étant de préférence déplacés d'une longueur de déplacement égale.

3. Système selon la revendication 2, dans lequel le dispositif de tension (5) comporte un élément de guidage (8), en particulier un canal de guidage, qui est conçu pour guider le guide de lumière (2) au moins par sections le long de la direction de tension (S), l'élément de guidage (8) étant de préférence conçu de telle sorte que la section de guide de lumière guidée soit maintenue de manière coulissante sur l'élément de guidage (8) ou à travers l'élément de guidage (8), l'élément de tension (6) étant disposé entre l'élément de guidage (8) et la section de tension (3a) de l'élément de support (3) et étant monté de manière à pouvoir se déplacer par rapport à l'élément de guidage (8), l'élément de guidage (8) étant de préférence relié à l'élément de support (3), en particulier de manière fixe.

4. Système selon la revendication 3, dans lequel le dispositif de serrage (5) comprend un moyen de déplacement (9) qui est mobile par rapport à l'élément de serrage (6) et qui est de préférence en prise avec l'élément de serrage (6), le moyen de déplacement (9) étant agencé pour venir en prise avec une surface de pression (8a) de l'élément de guidage (8), l'élément de serrage (6) étant relié de manière fonctionnelle à l'élément de guidage (8) par l'intermédiaire du moyen de déplacement (9) de telle sorte qu'un mouvement, en particulier une rotation, du moyen de déplacement (9) par rapport à l'élément de serrage (6) se traduise par un déplacement de l'élément de serrage (6) le long de la direction de serrage (S), le moyen de déplacement (9) étant de préférence une vis qui peut être vissée pour déplacer l'élément de serrage (6) à travers une ouverture filetée de l'élément de serrage (6) conçue de manière complémentaire à la vis, une extrémité de vis qui est opposée à une tête de vis de la vis étant est conçue pour s'engager sur la surface d'appui (8a) de l'élément de guidage (8), l'engagement de l'extrémité de la vis sur la surface d'appui (8a) étant induit par le vissage de la vis dans l'ouverture filetée et étant converti en un déplacement de l'élément de serrage (6) le long de la direction de serrage.

5. Système selon l'une des revendications précédentes, dans lequel la deuxième partie d'extrémité (2b) présente une autre surface de couplage de lumière (2b1), l'autre surface de couplage de lumière (2b1) étant de préférence orientée orthogonalement par rapport à la surface d'enveloppe du guide de lumière (2c1).

6. Système selon l'une des revendications précédentes, dans lequel la partie de retenue (4) présente une forme bombée.

7. Système selon l'une des revendications 2 à 6, dans lequel la première partie d'extrémité (2a) du guide de lumière (2) débouche dans une partie de réception de l'élément de serrage (6), la partie de réception présentant une forme correspondant au guide de lumière (2), la partie de réception entourant au moins partiellement, de préférence complètement sur le pourtour, la première partie d'extrémité (2a).

8. Système selon l'une des revendications 2 à 7, dans lequel la partie d'engagement (7) de la première partie d'extrémité (2a) du guide de lumière (2) est conçue comme une surface de contact qui est notamment orientée parallèlement à la surface de couplage de lumière (2a1) de la première partie d'extrémité (2a), l'élément de serrage (6) présente une surface de contact opposée (6a) pouvant être mise en contact avec la surface de contact, dans lequel, lorsque la surface de contact de la première partie d'extrémité (2a) entre en contact avec la surface de contact opposée (6a) de l'élément de serrage (6), le déplacement de l'élément de serrage (6) le long de la direction de serrage (S) est transmis à la première partie d'extrémité (2a) du guide de lumière (2).

9. Système selon l'une des revendications précédentes, dans lequel la partie de retenue (4) est réalisée sous la forme d'une paroi formée de manière à correspondre à la surface d'enveloppe (2c1) du guide de lumière, laquelle est conçue de telle sorte qu'au maximum la moitié de la circonférence de la surface d'enveloppe (2c1) du guide de lumière (2c1) est entourée par la paroi, la surface de couplage de lumière (2c2) étant de préférence formée sur une partie de la surface d'enveloppe du guide de lumière (2c1) exposée par la partie de retenue (4).

10. Système selon l'une des revendications précédentes, dans lequel l'élément de support (3) comporte un élément optique (11), en particulier une optique à paroi épaisse, qui présente une surface d'entrée de lumière (11a) et une surface de sortie de lumière, l'élément optique étant disposé sur l'élément de support (3) de telle sorte que la lumière découplée de la surface de découplage de lumière (2c2) du guide de lumière (2) soit couplée dans l'élément optique via la surface d'entrée de lumière (11a) de l'élément optique, l'élément optique étant de préférence disposé sur l'élément support (3) de telle sorte que le corps conducteur de lumière (2c) soit disposé au moins par sections entre la section de maintien (4) et l'élément optique.

11. Système selon l'une des revendications précédentes, dans lequel l'élément de support (3) comporte une première source lumineuse (10a) qui est disposée sur l'élément de support (3), de préférence sur la partie de serrage (3a) de l'élément de support (3), de telle sorte que la lumière émise par la source lumineuse (10a) puisse être couplée dans la surface de couplage de lumière (2a1) de la première partie d'extrémité (2a) du guide de lumière (2), la première source lumineuse (10a) étant de préférence disposée en face de la surface de couplage de lumière (2a1), à une distance supérieure à zéro.

12. Système selon l'une des revendications précédentes, dans lequel l'élément de support (3) comporte une deuxième source lumineuse (10b) qui est disposée sur la partie de fixation (3b) de l'élément support (3), la deuxième partie d'extrémité (2b) du guide de lumière (2) comportant une autre surface de couplage de lumière (2b1), la deuxième source lumineuse (10b) étant disposée et agencée de manière à coupler de la lumière dans l'autre surface de couplage de lumière (2b1) de la deuxième partie d'extrémité (2b) du guide de lumière (2), la deuxième source lumineuse (10b) étant de préférence disposée en face de l'autre surface de couplage de lumière (2b1), à une distance supérieure à zéro.

13. Système selon l'une des revendications précédentes, dans lequel la première surface de couplage de lumière (2a1) de la première partie d'extrémité (2a) est orientée orthogonalement par rapport à la surface d'enveloppe (2c1) du guide de lumière.

14. Système selon l'une des revendications précédentes, dans lequel la distance normale entre la surface de couplage de lumière (2a1) de la première partie d'extrémité (2a) et la partie de serrage (3a) de l'élément de support (3) est supérieure à zéro, la distance normale avant le déplacement de la première partie d'extrémité (2a) par le dispositif de serrage (5) est supérieure à celle après son déplacement, le déplacement étant de préférence tel qu'il compense une dilatation longitudinale du guide de lumière (2) due à la température.

15. Dispositif d'éclairage pour un véhicule automobile, comprenant un système (1) selon l'une des revendications 1 à 14, le dispositif d'éclairage étant par exemple conçu comme un phare de véhicule automobile, un feu arrière, un feu stop ou un feu de signalisation, le dispositif d'éclairage comportant une source lumineuse pour former une fonction d'éclairage, la source lumineuse comprenant le guide de lumière du système (1).
